# EUROPEAN PATENT SPECIFICATION

(11) **EP 0 774 288 B1**
(45) Date of publication and mention of the grant of the patent: **22.01.2003**
(21) Application number: 96308350.6
(22) Date of filing: 19.11.1996
(51) Int. Cl.: B01D 29/15, B01D 29/66

(54) **FILTER AND FILTER ELEMENT**
Filter und Filterelement
Filtre et élément filtrant

(30) Priority: 20.11.1995 GB 9523718
(43) Date of publication of application: 21.05.1997
(73) Proprietor: USF Limited, Hertford SG13 7NW (GB)
(72) Inventor: Stolberg, Errol, Greenford, Middlesex, UB6 9NY (GB)
(74) Representative: Rackham, Stephen Neil

(56) References cited:
- GB-A- 892 480
- GB-A- 1 057 855
- US-A- 5 207 930

## Description

Filters are used in the purification of water and other liquids for the removal of particles suspended in the liquid. Liquid containing suspended particles is passed through a filter medium in which the particles are trapped allowing the liquid alone to pass through. The filter medium is often provided as a replaceable element in a filter assembly.

Typical filter elements include a medium of mesh, paper, sponge or windings of string or other fibre. These media may be provided on a hollow, generally cylindrical former. In this case, the liquid to be filtered typically passes from the outer surface of the filter element to the inner hollow core.

To achieve a high flow rate of liquid through the filter medium, the pores in the filter medium should be large. However, to remove small suspended particles from the liquid, the pores in the filter medium must be small. It will therefore be appreciated that, for any particular application, there is an optimum size of pore which balances the requirements for flow rate and particle removal.

The particles removed from the liquid as it passes through the filter element are retained by the filter medium. After a time, the particles retained by the filter medium tend to clog or 'blind' the filter element. This reduces the flow rate of liquid through the filter element. It is therefore necessary for the filter element to be replaced or cleaned, for example by a backwash. In a backwash operation, liquid is passed through the filter element in the reverse direction compared to the direction of flow during filtration. The reverse flow of liquid washes away the particles which have collected on or in the filter medium.

Conventionally, filter elements are cleaned or replaced regularly after a predetermined period of use, or after a particular volume of liquid has been filtered. This takes no account of the amount of suspended particles in the liquid, and therefore the amount of clogging of the filter. It is therefore a problem that conventional filter elements may be cleaned or replaced too late or too early.

The cleaning or replacement of a filter element is expensive, since it is time consuming, and the filtration must be stopped during the cleaning or replacement of the filter element. Accordingly, it is important not to clean or replace the filter element unnecessarily. It is also important not to leave the cleaning or replacement of the filter too late, since this will mean the filtration is being carried out inefficiently, and will reduce its throughput.

US 5207930 discloses a filter cartridge formed from a self-supporting helix. The coils are maintained closed during the filtering cycle, the liquid passing through radial grooves in the coils of the helix, and the coils are opened during the backwash cycle.

According to a first aspect of the present invention, a filter element comprises: a filter medium and a liquid impervious member arranged so that, in use, the pressure difference across the filter element during a filtering operation causes compression of the filter element to reduce the size of the pores in the filter medium, and so that, in use, the pressure difference across the filter element during a backwashing operation causes expansion of the filter element to increase the size of the pores in the filter medium characterised in that the filter medium comprises string or other fibre wound around the outer surface of an axially compressible cylindrical former which is formed from a resilient material, wherein the pores are defined as gaps between the windings which are closed and separated when the filter element is compressed and extended respectively.

With the filter element according to the present invention, the pore size of the filter medium is small during filtering, giving good removal of particles suspended in a liquid being filtered. As the filter blinds, the pressure difference across the filter element increase, further compressing the filter medium and reducing the size of the pores. This enhances the removal of particles suspended in the liquid, but reduces the flow rate through the filter element. This alerts the user that it is necessary to replace or clean the filter element. When cleaning the filter element by a backwash operation the filter element is expanded, increasing the size of the pores in the filter medium. This increase in the size of the pores releases the particles trapped in the filter medium, and allows them to be flushed away easily with the backwash liquid, giving rapid and efficient cleaning.

The liquid impervious member is preferably an end cap which covers one end of the filter element. In this case, the surface area of the liquid impervious member is large, and therefore there is a large area to which the pressure difference is applied to cause the compression and expansion of the filter element. Preferably, the former is constructed from a plastics material formed in a herringbone arrangement. This gives the filter element a high radial strength, but allows for its axial compression.

The end cap preferably includes an upstanding tube which passes through the interior of the filter medium and former, and which includes radial holes. In use, liquid filtered by the filter medium passes into the tube, and to a liquid outlet of the filter.

According to a second aspect of the present invention, a filter assembly includes a liquid inlet, a liquid outlet and a liquid path between the inlet and the outlet, the path including the filter element according to the first aspect of the present invention.

The filter assembly preferably includes a means for observing or detecting the compression of the filter element. This indication can be used to determine when the filter element requires cleaning as the amount of compression depends on the pressure difference across the filter element, and is therefore dependent on the condition of the filter. The means preferably indicates when the filter element is compressed to a predetermined level, or when the pressure difference across the filter element reaches a predetermined level. This shows when the filter element needs cleaning or replacement.

The means for observation or detection of the displacement of the liquid impervious member may be a transparent window adjacent the liquid impervious member. Preferably however, means are provided for detecting the position of the liquid impervious member, for example a proximity switch which detects when the member reaches a predetermined position, and then gives an alarm, for example an audio or visual alarm.

It is advantageous that the filter assembly includes a biasing means, for example a compression spring or lead screw, for applying a known force to compress the filter element. In this way, the size of the pores of the filter medium are reduced by the applied force when the pressure across the filter element is below a predetermined level. In this way, the size of the pores are known whilst the pressure is below the predetermined level, and can be selected to give optimum filtering efficiency balancing flow rate and particle removal, independent of the condition of the filter element. When the filter element blinds so that the pressure difference across the filter element exceeds the predetermined level, the filter element will compress more than the compression due to the biasing means, reducing the flow rate through the filter element and indicating that the filter element should be cleaned or replaced. In this way, the filter can operate with optimum pore size until its condition requires it to be cleaned.

It will be appreciated that the feature of the biasing means is applicable even where the filter element is not arranged to expand during a backwashing operation, or where it is not possible to carry out a backwashing operation, in which case the filter element requires replacement when the flow rate decreases.

It is advantageous for the filter assembly to include a means for substantially shutting of the flow of liquid when the pressure difference across the filter element exceeds a predetermined level. This requires a user to replace or clean the filter element before continued filtration.

It is preferred that the filter assembly includes a downpipe in the liquid path in communication with the liquid outlet, and through which the filtered liquid passes. In this case, it is preferred that the filter element includes an upstanding tube connected to the liquid impervious member and extending inside the filter medium, and into the downpipe, and includes radial holes through which the filtered liquid passes. In this case, the upstanding tube will be axially displaced by the displacement of the liquid impervious member, and it is preferred that the length of the upstanding tube is such that the end of the tube seals against the top of the downpipe when the pressure across the filter medium is such as to indicate the filter element must be cleaned or replaced. In this case, if the warning afforded by the displacement of the liquid impervious member is ignored, and the filter not cleaned or replaced, the flow of liquid through the assembly is stopped by the seating of the tube on the top of the downpipe, and this stops the filtration process until the filter element is cleaned or replaced. It is preferred that the upper portion of the upstanding tube includes a bleed hole to allow small flow rate of liquid to the liquid outlet even when the upstanding tube is seated on the downpipe. This small flow ensures that downstream apparatus, such as a pump, will not become overheated due to the absence of liquid.

According to a third aspect of the present invention, the use of a filter element comprises compressing the filter element during a filtering operation to reduce the size of the pores of the filter medium, and expanding the filter element during a backwashing operation to increase the size of the pores of the filter medium to release the particles trapped in the filter medium.

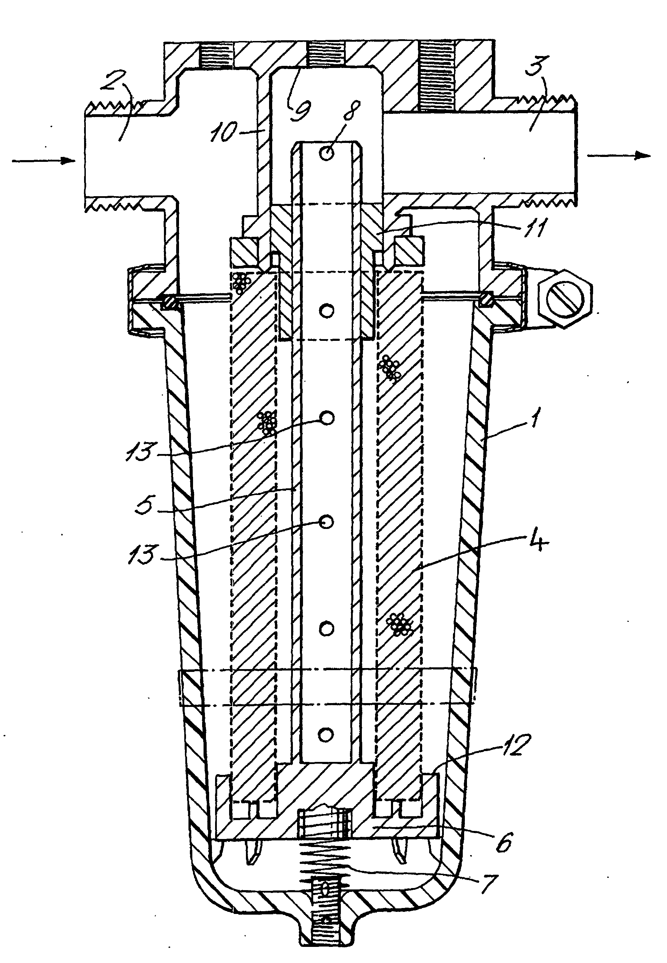

An example of a filter element and a filter assembly according to the present invention will be described in accordance with the accompanying Figure which shows a cross section of a filter assembly according to the second aspect of the present invention, and including the filter element of the first aspect of the present invention.

The filter includes a main bowl 1, and liquid inlet 2 and outlet 3. The liquid inlet 2 opens directly into the main bowl 1 of the filter. The water outlet 3 is connected to a downpipe 10, at the lower end of which is mounted a connector 11. A filter element is mounted on the outer surface of the connector 11. The filter element includes a cylindrical former around which is wound a string filter medium 4. The inner diameter of the former corresponds to the outer diameter of the connector 11, allowing the filter element to be connected to the connector 11 by an interference fit.

A liquid impermeable end cap 6 is provided over the lower end of the filter element. The end cap 6 is made of a rigid plastics material, and includes a recess 12 for receiving and connecting to the filter element. Connected to the end cap 6 is a standpipe 5. The standpipe 5 extends through the length of the filter element, through the inner hole of the connector 11, and into the downpipe 10. The standpipe 5 includes a number of holes provided in its side wall. The end cap 6 and attached filter element are supported by a compression spring 7 provided at the bottom of the main bowl 1. The compression spring 7 compresses the filter element by a predetermined amount to reduce the size of the pores in the filter medium 4. The spring 7 may be replaced by a lead screw (not shown).

In use, water or other liquid, enter the main bowl 1 of the filter through the inlet 2. The liquid passes generally horizontally through the filter medium 4, during which suspended particles are filtered from the liquid. The filtered liquid enters the standpipe 5 through the holes 13, and due to the water pressure in the main bowl 1, the water passes up the standpipe 5, through the downpipe 10, and out of the filter through the outlet.

As the liquid is filtered, the filtered material begins to clog the filter medium 4. As the filter medium 4 clogs, a greater pressure difference across the filter element is required for filtration, and therefore the pressure in the main bowl 1 increases compared to the pressure inside the filter element and the support tube 5. This high pressure is exerted on the end face of the end cap 6, and, when this pressure is greater than the force generated by the compression spring 7, pushes the end cap 6 vertically upwards, thereby further compressing the filter element. The amount of compression of the filter element depends on the pressure difference across the end cap 6, which is in turn due to the amount of clogging of the filter element. Accordingly, it is possible to determine when the filter element requires replacement by determination of the amount of compression of the filter element, or more easily by the amount of vertical displacement of the end cap 6. This can be determined by measuring the height of the end cap 6 from the bottom of the main bowl 1, for example by gradations provided on the side of the bowl 1.

As the pressure across the filter element increases, the top of the standpipe 5 will approach the top of the downpipe 10. When the top of the standpipe 5 contacts the end 9 of the tube 10, liquid is unable to pass through the end of the tube to the outlet 3. A pair of relief holes 8 are therefore provided near the end of the support tube 5. If the pressure in the main bowl 1 becomes so great that the top of the support tube 5 abuts the end 9 of the downpipe 10, the flow of liquid is stopped, requiring cleaning or replacement of the filter element. Relief holes 8 may be provided near the top of the standpipe 5 to allow fluid to pass at a slow rate. As some liquid will pass through the outlet 3, downstream appliances, for example pumps, will not become damaged due to overheating. However, it will be apparent that the filter element must be cleaned or replaced.

When the filter element becomes clogged, the element may be replaced, or backwashed. In the latter case, clean liquid is introduced into the filter through the liquid outlet 3. The liquid passes through the vertically extending tube 10, and through the support tube 5, causing the pressure inside the filter element to exceed the pressure in the main bowl 1. This causes the end cap 6 to move vertically downwards, against the bias of the compression spring 7 and thereby opens the pores in the filter medium 4. As the liquid passes through the filter element, and into the main bowl 1, particles collected in the filter element are released from the filter medium 4 as the pores open are washed into the main bowl 1, and out through the liquid inlet 2 for disposal.

## Claims

1. A filter element comprising a filter medium (4) and a liquid impervious member (6) arranged so that, in use, the pressure difference across the filter element during a filtering operation causes compression of the filter element to reduce the size of the pores in the filter medium (4), and so that, in use, the pressure difference across the filter element during a backwashing operation causes expansion of the filter element to increase the size of the pores in the filter medium (4) **characterised in that** the filter medium (4) comprises string or other fibre wound around the outer surface of an axially compressible cylindrical former which is formed from a resilient material, wherein the pores are defined as gaps between the windings which are closed and separated when the filter element is compressed and extended respectively.

2. A filter element according to claim 1, in which the liquid impervious member (6) is an end cap which covers one end of the filter element.

3. A filter element according to claim 2, in which the end cap (6) includes an upstanding tube (5) which passes through the interior of the filter medium (4) and former, and which includes radial holes (13), and arranged so that, in use, liquid filtered by the filter medium (4) passes into the tube (5), and to a liquid outlet (3) of the filter.

4. A filter element according to any one of the preceding claims in which the former is formed from a plastics material formed in a herringbone arrangement.

5. The use of a filter element according to any one of the preceding claims comprising compressing the filter element during a filtering operation to reduce the size of the pores of the filter medium (4), and expanding the filter element during a backwashing operation to increase the size of the pores of the filter medium (4) to release the particles trapped in the filter medium (4).

6. A filter assembly including a liquid inlet (2), a liquid outlet (3) and a liquid path between the inlet (2) and the outlet (3), the path including the filter element according to any one of claims 1 to 4.

7. A filter assembly according to claim 6, further including a means for observing or detecting the compression of the filter element.

8. A filter assembly according to claim 7, in which the means for observation or detection the compression of the filter element is a transparent window adjacent the liquid impervious member (6) for observing the displacement of the liquid impervious member (6).

9. A filter assembly according to claim 7, in which the means for observing or detecting the compression of the filter element includes a proximity switch to detect when the liquid impervious member (6) reaches a predetermined position, and then gives an alarm.

10. A filter assembly according to any one of claims 6 to 9, further comprising a biasing means (7) for applying a known force to compress the filter element.

11. A filter assembly according to any one of claims 6 to 10, further comprising a means for substantially shutting of the flow of liquid when the pressure difference across the filter element exceeds a predetermined level.

## Patentansprüche

1. Filterelement, das ein Filtermedium (4) und ein flüssigkeitsundurchlässiges Element (6) umfasst, so dass in Funktion der Druckunterschied über das Filterelement während eines Filtervorgangs Zusammendrücken des Filterelementes bewirkt, so dass die Größe der Poren in dem Filtermedium (4) abnimmt, und so dass in Funktion der Druckunterschied über das Filterelement während eines Rückspülvorgangs Ausdehnung des Filterelementes bewirkt, so dass die Größe der Poren in dem Filtermedium (4) zunimmt, **dadurch gekennzeichnet, dass** das Filtermedium (4) Faden oder andere Fasem umfasst, die um die Außenfläche eines axial zusammendrückbaren Wickelkörpers gewickelt sind, der aus einem elastischen Material besteht, wobei die Poren als Zwischenräume zwischen den Wicklungen ausgebildet sind, die geschlossen und getrennt werden, wenn das Filterelement zusammengedrückt bzw. ausgedehnt wird.

2. Filterelement nach Anspruch 1, wobei das flüssigkeitsundurchlässige Element (6) eine Abschlusskappe ist, die ein Ende des Filterelementes abdeckt.

3. Filterelement nach Anspruch 2, wobei die Abschlusskappe (6) eine aufrechtstehende Röhre (5) enthält, die durch das Innere des Filtermediums (4) und des Wickelkörpers hindurchtritt und die radiale Löcher (13) enthält und so angeordnet ist, dass in Funktion durch das Filtermedium (4) gefilterte Flüssigkeit in die Röhre (5) und zu einem Flüssigkeitsauslass (3) des Filters gelangt.

4. Filterelement nach einem der vorangehenden Ansprüche, wobei der Wickelkörper aus einem Kunststoffmaterial besteht, das in einer Fischgratanordnung ausgebildet ist.

5. Einsatz eines Filterelements nach einem der vorangehenden Ansprüche, der das Zusammendrücken des Filterelements während eines Filtervorgangs, um die Größe der Poren des Filtermediums (4) zu verkleinern, und das Ausdehnen des Filterelementes während eines Rückspülvorgangs, um die Größe der Poren des Filterelementes (4) zu vergrößem und die in dem Filterelement (4) eingeschlossenen Teilchen freizugeben, umfasst.

6. Filteranordnung, die einen Flüssigkeitseinlass (2), einen Flüssigkeitsauslass (3) und einen Flüssigkeitsweg zwischen dem Einlass (2) und dem Auslass (3) enthält, wobei der Weg das Filterelement nach einem der Ansprüche 1 bis 4 einschließt.

7. Filteranordnung nach Anspruch 6, die des Weiteren eine Einrichtung zum Beobachten oder Erfassen des Zusammendrückens des Filterelementes enthält.

8. Filteranordnung nach Anspruch 7, wobei die Einrichtung zum Beobachten oder Erfassen des Zusammendrückens des Filterelementes ein an das flüssigkeitsundurchlässige Element (6) angrenzendes, durchsichtiges Fenster zum Beobachten der Verformung des flüssigkeitsundurchlässigen Elementes (6) ist.

9. Filteranordnung nach Anspruch 7, wobei die Einrichtung zum Beobachten oder Erfassen des Zusammendrückens des Filterelementes einen Näherungsschalter enthätt, der erfasst, wenn das flüssigkeitsundurchlässige Element (6) eine vorgegebene Position erreicht, und dann eine Wammeldung ausgibt.

10. Filteranordnung nach einem der Ansprüche 6 bis 9, das des Weiteren eine Spanneinrichtung (7) umfasst, die eine bekannte Kraft zum Zusammendrücken des Filterelementes ausübt.

11. Filteranordnung nach einem der Ansprüche 6 bis 10, das des Weiteren eine Einrichtung umfasst, die den Strom von Flüssigkeit im Wesentlichen absperrt, wenn der Druckunterschied über das Filterelement einen vorgegebenen Pegel übersteigt.

## Revendications

1. Elément de filtre comprenant un milieu filtrant (4) et un organe (6) imperméable aux liquides, agencés de manière à ce que, en cours d'utilisation, la différence de pression à travers l'élément de filtre pendant une opération de filtration provoque la compression de l'élément de filtre pour réduire la dimension des pores dans le milieu filtrant (4), et de manière à ce que, en cours d'utilisation, la différence de pression à travers l'élément de filtre pendant une opération de lavage à contre-courant provoque l'expansion de l'élément de filtre pour augmenter la dimension des pores dans le milieu filtrant (4), **caractérisé en ce que** le milieu filtrant (4) comprend un cordon ou une autre fibre enroulée autour de la surface extérieure d'un gabarit cylindrique compressible dans le sens axial, qui est constitué d'un matériau élastique, dans lequel les pores sont définis comme des espaces entre les enroulements, qui sont rapprochés et séparés lorsque l'élément de filtre est respectivement comprimé et expansé.

2. Elément de filtre selon la revendication 1, dans lequel l'organe (6) imperméable aux liquides est un bouchon d'extrémité qui couvre une extrémité de l'élément de filtre.

3. Elément de filtre selon la revendication 2, dans lequel le bouchon d'extrémité (6) comprend un tube droit (5) qui passe à travers l'intérieur du milieu filtrant (4) et du gabarit, et qui comprend des trous radiaux (13), et est agencé de manière à ce que, en cours d'utilisation, le liquide filtré par le milieu filtrant (4) passe à l'intérieur du tube (5), et vers une sortie pour liquide (3) du filtre.

4. Elément de filtre selon l'une quelconque des revendications précédentes, dans lequel le gabarit est constitué d'un matériau plastique agenc é en une disposition en arrête de poisson.

5. Utilisation d'un élément de filtre selon l'une quelconque des revendications précédentes, comprenant la compression de l'élément de filtre pendant une opération de filtration, pour réduire la dimension des pores du milieu filtrant (4), et l'expansion de l'élément de filtre pendant une opération de lavage à contre-courant, pour augmenter la dimension des pores du milieu filtrant (4) pour libérer les particules piégées dans le milieu filtrant (4).

6. Système de filtre comprenant une entrée (2) pour liquide, une sortie (3) pour liquide, et un trajet pour liquide entre l'entrée (2) et la sortie (3), le trajet incluant l'élément de filtre selon l'une quelconque des revendications 1 à 4.

7. Système de filtre selon la revendication 6, comprenant de plus un moyen pour observer ou déceler la compression de l'élément de filtre.

8. Système de filtre selon la revendication 7, dans lequel le moyen pour observer ou déceler la compression de l'élément de filtre est une fenêtre transparente adjacente à l'organe (6) imperméable au liquide, pour observer le déplacement de l'organe (6) imperméable au liquide.

9. Système de filtre selon la revendication 7, dans lequel le moyen pour observer ou déceler la compression de l'élément de filtre comprend un commutateur de proximité pour déceler lorsque l'organe (6) imperméable au liquide atteint une position prédéterminée, et donne alors une alerte.

10. Système de filtre selon l'une quelconque des revendications 6 à 9, comprenant de plus un moyen de sollicitation (7) pour appliquer une force connue pour comprimer l'élément de filtre.

11. Système de filtre selon l'une quelconque des revendications 6 à 10, comprenant de plus un moyen pour arrêter en substance le courant de liquide lorsque la différence de pression à travers l'élément de filtre dépasse un seuil prédéterminé.
